# EUROPÄISCHE PATENTSCHRIFT

(11) **EP 0 416 315 B1**
(45) Veröffentlichungstag und Bekanntmachung des Hinweises auf die Patenterteilung: **30.11.1994**
(21) Anmeldenummer: 90115341.1
(22) Anmeldetag: 10.08.1990
(51) Int. Cl.: A01G 3/00, B02C 18/12, B02C 18/18

(54) **Häcksler zum Zerkleinern von Gartenabfällen mit einem Schneidwerk**
Shredder for comminuting garden waste with cutting device
Broyeur pour déchiqueter des débris de jardin, avec un dispositif de coupe

(30) Priorität: 02.09.1989 DE 3929257; 03.08.1990 DE 4024757
(43) Veröffentlichungstag der Anmeldung: 13.03.1991
(73) Patentinhaber: SABO-Maschinenfabrik GmbH, D-51645 Gummersbach (DE)
(72) Erfinder: Ostermeier, Heinrich, D-5000 Köln 90 (DE); Dell, Dieter, D-5276 Wiehl 1 (DE)
(74) Vertreter: Harwardt, Günther, Dipl.-Ing.

(56) Entgegenhaltungen:
- AU-B- 8 310 482
- CH-A- 634 235
- DE-A- 3 031 231
- DE-A- 3 619 403
- FR-A- 2 532 559

## Beschreibung

Die Erfindung betrifft einen Häcksler zum Zerkleinern von Gartenabfällen, wie Astwerk, Laub, Gras oder dergleichen, mit einem Schneidwerk, das eine in einem Schneidgehäuse drehbar gelagerte und von einem Motor angetriebene geschlitzte Messerscheibe, an der Messerklingen lösbar befestigt sind und an deren Unterseite Auswurfflügel angebracht sind, und ein der Messerscheibe zugeordnetes, stationäres Gegenmesser aufweist, und mit einem Trichter, der am Schneidgehäuse befestigt ist

Ein derartiger Häcksler ist aus der DE-A-32 09 873 bekannt. Das Gegenmesser ist dabei stationär am Trichter angebracht und überdeckt einen Teil der Messerscheibe. Es ist ein Deckel vorhanden, der mit dem Schneidgehäuse fest verbunden ist. Ferner ist er stoffschlüssig mit dem Trichter für das Einfüllen des zu häckselnden Gutes verbunden. Durch diese Anordnung ergibt sich eine erhebliche Lärmbelästigung, weil beim Häckseln die intermittierende Beaufschlagung des Gegenmessers als Körperschall auf den Trichter übertragen wird. Dieser wirkt als Verstärker.

In der DE-A-36 19 409 ist ein Häcksler beschrieben, bei dem der Durchbruch des Gehäuses, auf dem der Trichter für das Einfüllen des zu häckslenden Gutes aufsitzt, mit einer Begrenzungskante unmittelbar das Gegenmesser bildet. Beim Häckseln mit intermittierender Beaufschlagung der Begrenzungskante entsteht Lärm, der als Körperschall in den Trichter eingeleitet und von diesem verstärkt an die Umgebung abgegeben wird.

Die CH-A-634 235 beschreibt eine Zerkleinerungsmaschine für Schüttgüter. Es ist eine ortsfest angeordnete Schneidscheibe unmittelbar mit dem Gehäuse verbunden.

Ferner ist aus der DE-C-30 31 231 ein Häcksler bekannt, dessen Messerscheibe ein Vorzerkleinerungsmesser zugeordnet ist.

Der Erfindung liegt die Aufgabe zugrunde, einen Häcksler zu schaffen, bei dem eine verbesserte Schneidwirkung des Schneidwerkes ohne Rückwirkung des Schneidvorganges auf den Benutzer erzielt wird. Insbesondere soll die Schneidwirkung für das Zerkleinern von Astwerk verbessert und eine Reduzierung von Lärm, der beim Betrieb des Häckslers entsteht, erreicht werden.

Diese Aufgabe wird erfindungsgemäß dadurch gelöst, daß das Gegenmesser ein vom Trichter und Schneidgehäuse getrenntes Bauteil ist, das die Messerscheibe brückenartig überspannt und am Schneidgehäuse lösbar über Dämpfungslager befestigt ist.

Von Vorteil bei dieser Ausbildung ist, daß das zu zerkleinernde Gut an dem Gegenmesser eine Abstützbasis findet und so gehalten ist, daß ein wirksames Zerschneiden erzielt wird. Das lösbar befestigte Gegenmesser erlaubt einen Austausch der Messerscheibe. Ferner wird durch die Anordnung in Dämpfungslagern eine Lärmreduzierung beim Betrieb des Häckslers erreicht.

Bevorzugt überdeckt das Gegenmesser das Zentrum, also die Drechachse der Messerscheibe. Besonders einfach wird ein Austausch der Messerscheibe, wenn das Gegenmesser ausschwenkbar am Schneidgehäuse befestigt ist.

Zur lagegenauen Halterung des zu zerkleinernden Gutes beim Schneiden ist ein Gegenhalter vorhanden, der am Gegenmesser befestigt ist. Es werden verschiedene alternative Ausbildungen vorgeschlagen.

Nach einer ersten Ausführungsform ist vorgesehen, daß das Gegenmesser einen als Gegenhalter ausgebildeten mittleren Abschnitt aufweist, der aus der Stützfläche des Gegenmessers vorsteht. Es ist jedoch auch möglich, daß der Gegenhalter ein auf der Messerscheibe angebrachter und mit dieser rotierender Kegelstumpf ist. Dabei wird gewährleistet, daß durch den rotierenden Kegelstumpf mit einer glatten Oberfläche das Aufwickeln von Häckselgut vermieden wird.

Darüber hinaus verhindert der Gegenhalter, der das Zentrum der Messerscheibe und damit die Befestigung des Messers überdeckt, ein Einwirken des Astwerkes auf die Messerlagerung.

Bevorzugt ist jedoch der Gegenhalter flügelartig ausgebildet und an einem seitlichen Ende des Gegenmessers, nahe einer dessen Befestigungsstellen am Schneidgehäuse, angebracht.

Eine günstige Führung und Abstützung des zu zerkleinernden Gutes ergibt sich auch dann, wenn der Gegenhalter als von der Oberfläche des Messerscheibe weg sich verjüngender Teilkegel oder Kegelstumpf mit einer Achse, die eine Verlängerung der Drehachse der Messerscheibe darstellt, ausgebildet ist.

Bevorzugt ist die Stützfläche des Gegenmessers eben ausgebildet und ist mit einer Neigung zur Messerscheibe verlaufend angeordnet. Dabei kann die Neigung des Teilkegels oder Kegelstumpfes, welcher den Gegenhalter bildet, entsprechen. Die Stützfläche stellt, im Querschnitt gesehen, dann eine Ergänzung der Mantelfläche des Teilkegels dar. Vorzugsweise geht der Gegenhalter mit Rundungen in die Stützfläche über.

Zur Dämpfung von Schwingungen und damit zur Reduzierung von Lärm, der bei dem Betrieb des Häckslers entsteht, ist in Konkretisierung der vorgeschlagen, daß das Gegenmesser zur Bildung der Dämpfungslager federnd im Schneidgehäuse befestigt ist. Bevorzugt sind Dämpfungslager durch gummielastische Lagerstücke dargestellt. Dabei kann ein Gummi mit einer hohen Dämpfungseigenschaft gewählt werden.

Ein zentral angeordneter Gegenhalter kann zur Verbesserung des Schutzes und der Befestigung der Messerscheibe mit einer dem Zentrum der Messerscheibe zugewandten Ausnehmung versehen sein, mit der er einen Nabenansatz der Messerscheibe übergreift.

Dabei soll nach einem weiteren Merkmal die Befestigungsschraube zur Befestigung der Messerscheibe auf der Antriebswelle in der Ausnehmung des Gegenhalters verdeckt aufgenommen werden. Die Ausnehmung selbst weist Spiel zum Nabenansatz auf. Dieses Spiel ist vorgesehen, um die freie Bewegbarkeit des Gegenmessers im Rahmen der federnden Eigenschaften der gummielastischen Lagerstücke nicht zu behindern.

Es ist nach einem weiteren Merkmal der Erfindung auch, in der Ausnehmung des Gegenhalters ein Drucklager anzuordnen, das gegen ein federndes Auflager verschiebbar abgestützt ist und welches sich bei montiertem Gegenmesser axial auf der Stirnfläche des Nabenansatzes abstützt. Durch diese Ausbildung kann das Gegenmesser mit seiner lösbaren Befestigungsmöglichkeit als eine Art Schnellverschluß bei einem Austausch der Messerscheibe genutzt werden.

Zur Verbesserung der Zugänglichkeit für den Messeraustausch ist in weiterer Ausgestaltung vorgeschlagen, daß das Schneidgehäuse als Zugang zum Gegenmesser mit einer Öffnung versehen ist, die mit einem lösbaren Deckel verschlossen ist, der eine Abschlußfläche in Ergänzung zur Stützfläche des Gegenmessers aufweist, die im Querschnitt gesehen einen stumpfen Winkel mit der Stützfläche einschließt. Durch diese Abschlußfläche wird erreicht, daß das zu zerkleinernde Gut in Richtung auf den freiliegenden Teil der Messerscheibe bewegt wird. Bevorzugt ist die Abschlußfläche mit einer Neigung angeordnet, die eine Fortsetzung des Verlaufs der Mantelfläche des Teilkegels des Gegenhalters darstellt.

Günstige Schnittverhältnisse ergeben sich, wenn drei Messerklingen umfangsverteilt auf der Messerscheibe angebracht sind.

Um die Zerkleinerung auch von dünnem, biegsamen Astwerk weiter zu verbessern, ist in Ausgestaltung der Erfindung vorgesehen, daß die Messerscheibe mindestens ein zu ihrer Drehachse radial versetztes Vormesser aufweist, dessen Schneidkante von der die Messerklingen aufweisenden Oberfläche der Messerscheibe nach oben absteht, daß das Gegenmesser zur Oberfläche der Messerscheibe hin eine Ausnehmung aufweist, in der das Vormesser rotiert und die sich über die Höhe des Vormessers, aber nur über einen Teil dessen Rotationsdurchmessers erstreckt.

Das Vormesser, das nahe dem Zentrum der Messerscheibe angeordnet ist, wird ebenfalls von dem brückenartigen Gegenmesser überspannt und von diesem von oben soweit abgedeckt, daß das Astwerk und lose Gut an der mit dem Vormesser zusammenarbeitenden Gegenschneide des Gegenmesserns zerkleinert wird. Ferner wird durch die Abdeckung gewährleistet, daß das Astwerk nicht um das Vormesser gewickelt werden kann, sondern nur geschnitten wird. Hierdurch wird eine mögliche Blockade und damit Überlastung verhindert.

Für den Fall, daß kein Vormesser vorgesehen ist, kann es trotzdem günstig sein, den mittleren, das Zentrum der Messerscheibe überdeckenden Abschnitt des Gegenmessers mit einer Ausnehmung zu versehen, die der entsprechen kann, welche normalerweiser zur Aufnahme des Vormessers dient. Hierdurch wird ein Spalt zur Oberfläche der Messerscheibe gebildet. Dieser verhindert ein Aufwickeln von biegsamen Astwerk im Bereich der Drehachse der Messerscheibe. Durch diese Öffnung wird an die Hinterseite des Gegenmessers gelangendes Astwerk von der Rückseite aus durch Anlaufen gegen das Gegenmesser nochmals geschnitten.

Um ein Verstopfen der Rückseite gänzlich auszuschließen, kann die Messerscheibe mit in der Ausnehmung rotierenden, von der Oberfläche nach oben vorstehenden und sich radial erstreckenden Flügeln versehen sein. Diese geben dann in diesen Bereich hineingelangtes Gut noch einen Drall in Richtung auf die Hinterseite des Gegenmessers um dort ein Schneiden und Zerkleinern zu erreichen.

Für den Fall, daß zwei diametral angeordnete Vormesser vorgesehen sind, ist vorgeschlagen, diese zu den sich radial erstreckenden Flügeln umfangsversetzt an der Messerscheibe anzubringen.

Günstige Schneidverhältnisse für das Vormesser ergeben sich insbesondere dann, wenn die Schneidkante des Vormessers geneigt und mit größer werdendem Abstand zur Oberfläche der Messerscheibe deren Drehachse angenähert verläuft und zur Gegenschneide der Ausnehmung des Gegenmessers von der Oberfläche weg einen zunehmenden Abstand aufweist. Die Wirkungsweise des Vormessers wird unterstützt, wenn die Wandung der Ausnehmung als Teil einer Kegelstumpfbohrung gestaltet ist.

Bevorzugt sind in der Oberfläche der Messerscheibe Aufnahmeausnehmungen angebracht. Das als Winkel gestaltete Vormesser ist mit einem Schenkel, der parallel zur Oberfläche der Messerscheibe verläuft, in der Ausnehmung formschlüssig aufgenommen und mit der Messerscheibe verschraubt.

Günstige Häckselergebnisse ergeben sich für Gut, welches auf die Rückseite des Gegenmessers gelangt ist, insbesondere dann, wenn die der Stützfläche des Gegenmessers abgewandte und der Oberfläche der Messerscheibe zugewandte Unterfläche einen spitzen Winkel mit der Oberfläche der Messerscheibe einschließt.

Für den Fall, daß aufgrund einer Verstopfung ein Stillstand bzw. der überlastungsfall eingetreten sein sollte, kann die Messerscheibe mit einem Betätigungshebel zum Freidrehen versehen werden. Hierzu sind an ihrem Außenumfang verteilt Bohrungen angeordnet, in welche der Betätigungshebel einsetzbar ist.

Bevorzugte Ausführungsbeispiele der Erfindung sind in der Zeichnung schematisch dargestellt.

Es zeigt
- Figur 1: einen Häcksler in der Seitenansicht in Umrissen,
- Figur 2: eine Seitenansicht des Schneidwerkes im Schnitt,
- Figur 3: einen Schnitt A-A gemäß Figur 2,
- Figur 4: eine Draufsicht auf das Gegenmesser,
- Figur 5: eine Seitenansicht des Gegenmessers,
- Figur 6: ein Detail bezüglich des Gegenhalters und des von diesem überdeckten Bereiches der Messerscheibe mit einer Abstützung über ein Drucklager als Alternative zur Ausführung gemäß Figur 2.
- Figur 7: ein Detail mit einem rotierenden Gegenhalter,
- Figur 8: ein Detail bezüglich der Lagerung des Gegenmessers am Schneidgehäuse,
- Figur 9: ein Vormesser als Einzelteil in Seitenansicht und Draufsicht,
- Figur 10: eine Draufsicht auf die Oberfläche der Messerscheibe (als Einzelteil mit Vormesser),
- Figur 11: eine Seitenansicht der Messerscheibe nach Figur 10 im Schnitt und mit Vormesser,
- Figur 12: eine Draufsicht auf das Gegenmesser mit Ausnehmung, als Einzelteil und
- Figur 13: eine Rückansicht auf das Gegenmesser nach Figur 12.

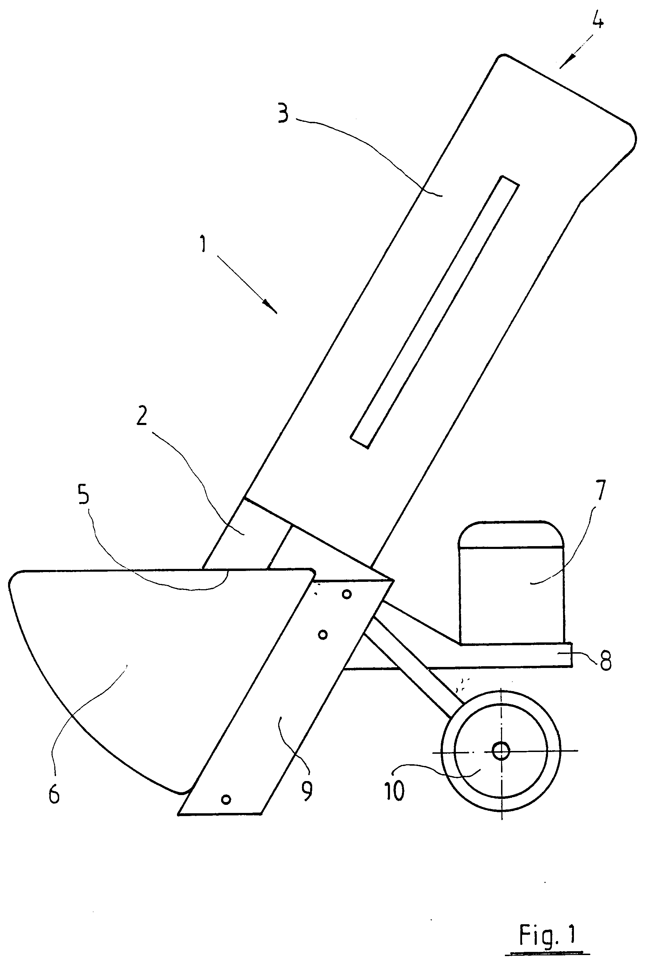

Der in Figur 1 dargestellte Häcksler 1 besteht im wesentlichen aus dem Schneidwerk 2, in welchem das zu häckselnde Gut zerkleinert wird und dem Trichter 3, über dessen Einfüllöffnung 4 das zu zerkleinernde Gut dem Schneidwerk 2 zugeführt wird. An die Auswurföffnung 5 des Schneidwerkes 2 kann eine Sammelvorrichtung 6 angeschlossen sein, in welche hinein das zerkleinerte Gut ausgeworfen wird. Das Schneidwerk 2 wird durch einen Antriebsmotor 7, der als Elektromotor oder Brennkraftmaschine ausgebildet sein kann, angetrieben, welcher beispielsweise über eine Konsole 8 an dem Schneidwerk 2 befestigbar ist. Ferner ist dem Schneidwerk 2 ein Gestell 9 mit Rädern 10 zugeordnet, mit denen der Häcksler 1 auf dem Boden aufsteht.

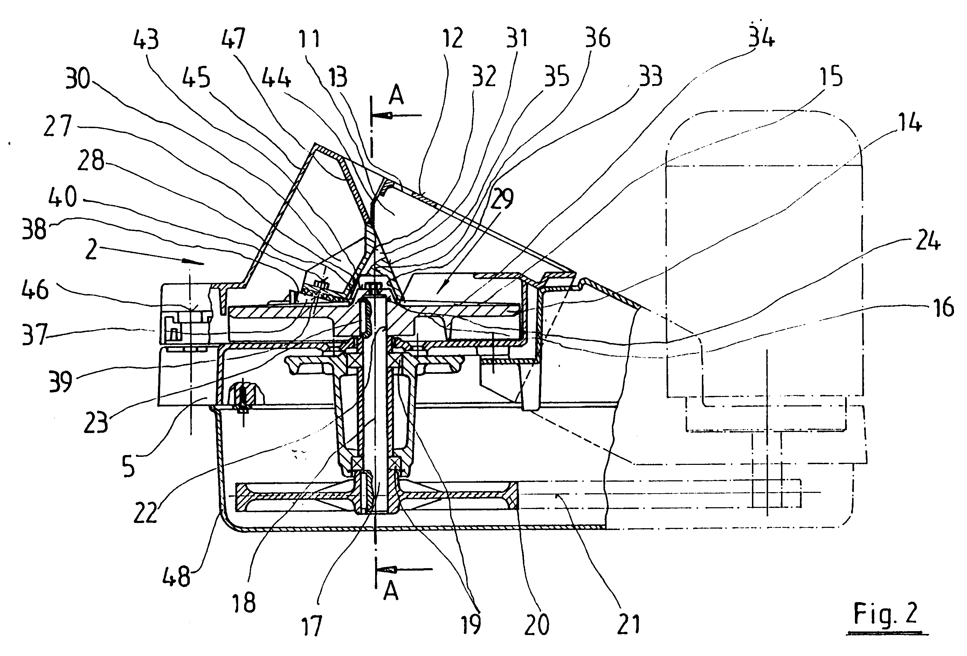

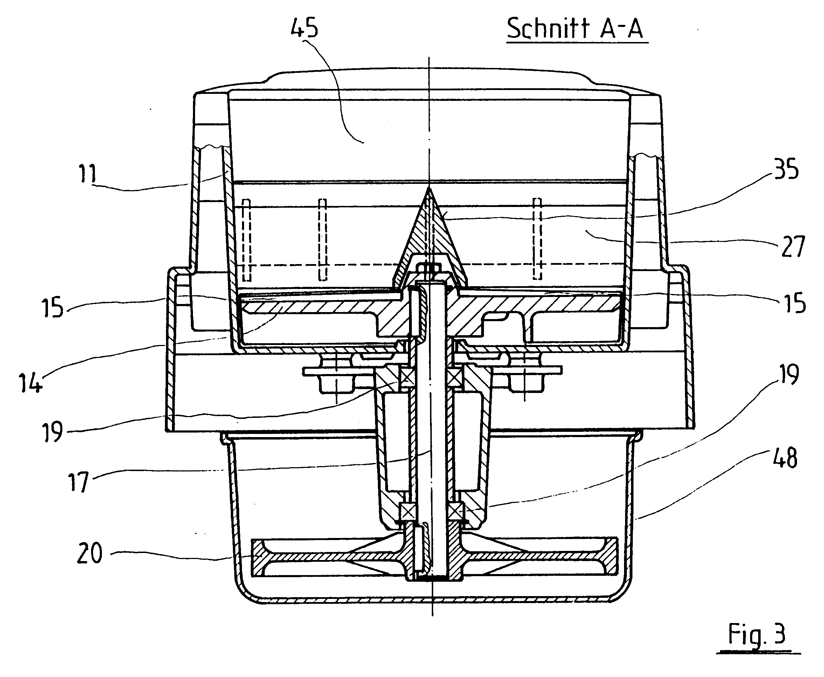

Aus den Figuren 2 und 3 ist das Schneidwerk 2 ersichtlich. Das Schneidwerk 2 besteht aus dem Schneidgehäuse 11, in dem eine Messerscheibe 14 rotierend angeordnet ist. Die Anschlußfläche 12 des Schneidgehäuses 11 ist mit einer Öffnung 13 versehen. Die Anschlußfläche 12 dient zum Anschluß des Trichters 3. Die Messerscheibe 14 besteht aus der eigentlichen Scheibe 16 und daran angebrachten Messerklingen 15. Die Scheibe 16 ist mit Schlitzen versehen, in deren Bereich die Messerklingen 15 angeordnet sind. Die Schlitze dienen dem Durchtritt des Häckselgutes. Ferner sind an der Unterseite der Scheibe 16 umfangsverteilte und radial sich erstreckende Auswurfflügel 16a angebracht.

Die Messerscheibe 14 ist auf einer Antriebswelle 17 montiert. Die Antriebswelle 17 hat eine Drehachse 18 und ist über Lager 19 im Schneidgehäuse 11 drehbar gehalten. An dem der Messerscheibe 14 abgewandten Ende ist auf der Antriebswelle 17 eine Riemenscheibe 20 befestigt, die über einen Riemen 21 mit einer weiteren Riemenscheibe des in Figur 1 ersichtlichen Antriebsmotors 7 verbunden ist. An die Antriebswelle 17 kann jedoch auch unmittelbar ein Antriebsmotor 7 angeschlossen werden oder die Abtriebswelle des Antriebsmotors kann die Antriebswelle ersetzen.

Der Antrieb und insbesondere die Riemenscheibe 20 und der Riemen 21 sind von einer Haube 48, die am Schneidgehäuse 11 befestigt ist, überdeckt.

Zur lösbaren Befestigung der Messerscheibe 14 auf der Antriebswelle 17 besitzt die Messerscheibe eine Nabenbohrung 22, in welche die Antriebswelle 17 eingesetzt ist. Antriebswelle 17 und Messerscheibe 14 sind über einen Keil 23 drehfest und über eine Befestigungsschraube 24, die sich axial an einer Stirnfläche 43 eines Nabenansatzes 25 im Zentrum der Messerscheibe 14 abstützt, axial festgelegt. Der Nabenansatz 25 besitzt eine kegelige Außenfläche 26, welche sich von der Oberfläche 34 der Scheibe 16 nach oben weg verjüngt. Aus der Oberfläche 34 stehen die Schneidkanten der Messerklingen 15 hervor. Bevorzugt sind drei Messerklingen 15 auf dem Umfang der Scheibe 16 verteilt angeordnet.

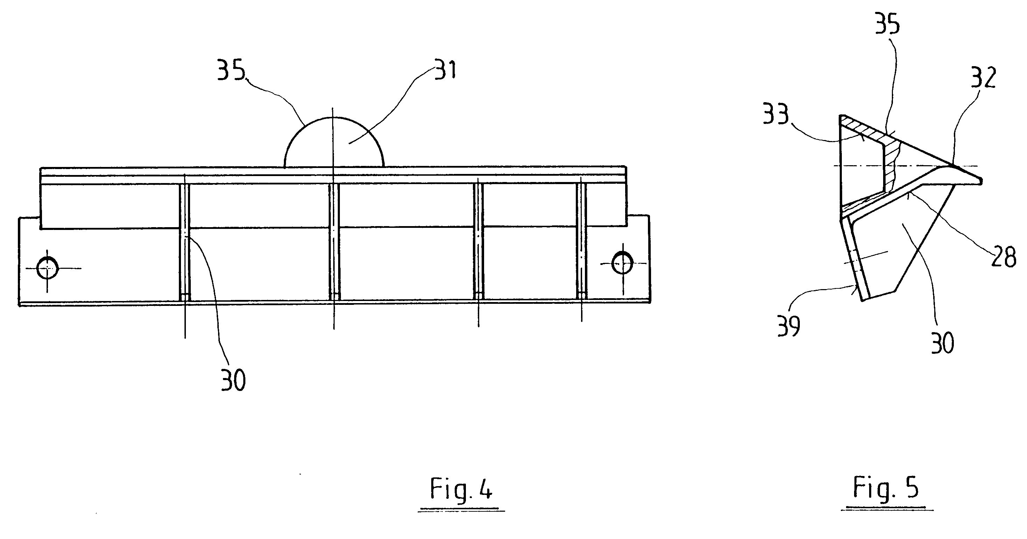

Der Messerscheibe 14 ist ein Gegenmesser 27 zugeordnet, das detailliert in den Figuren 4 - 6 bzw. 12, 13 dargestellt ist. Das Gegenmesser 27 überspannt die Messerscheibe 14 brückenartig und ist an den Enden über gummielastische Lagerstücke 37, die in Lagerausnehmungen 38 des Schneidgehäuses 11 angeordnet sind, abgestützt.

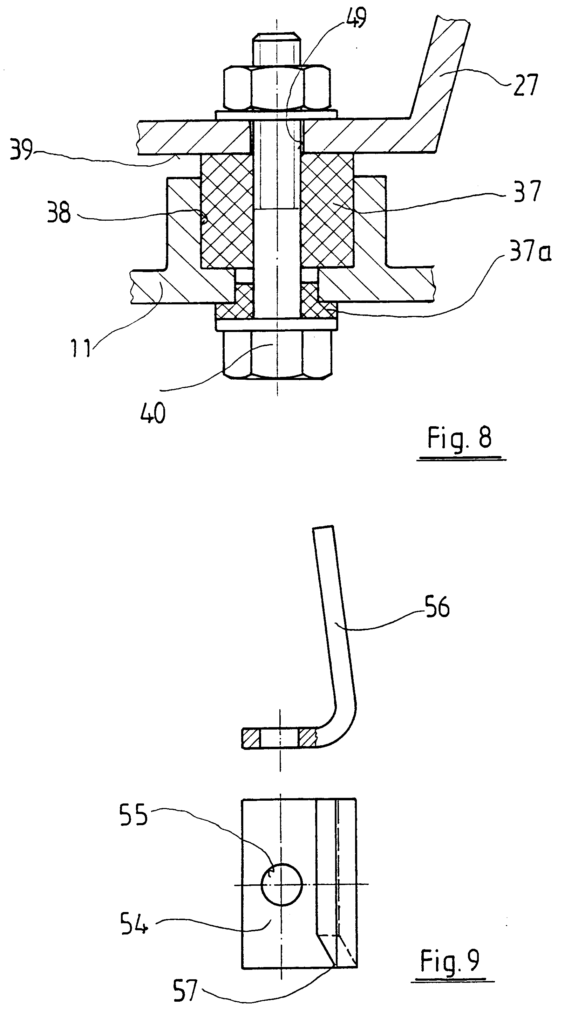

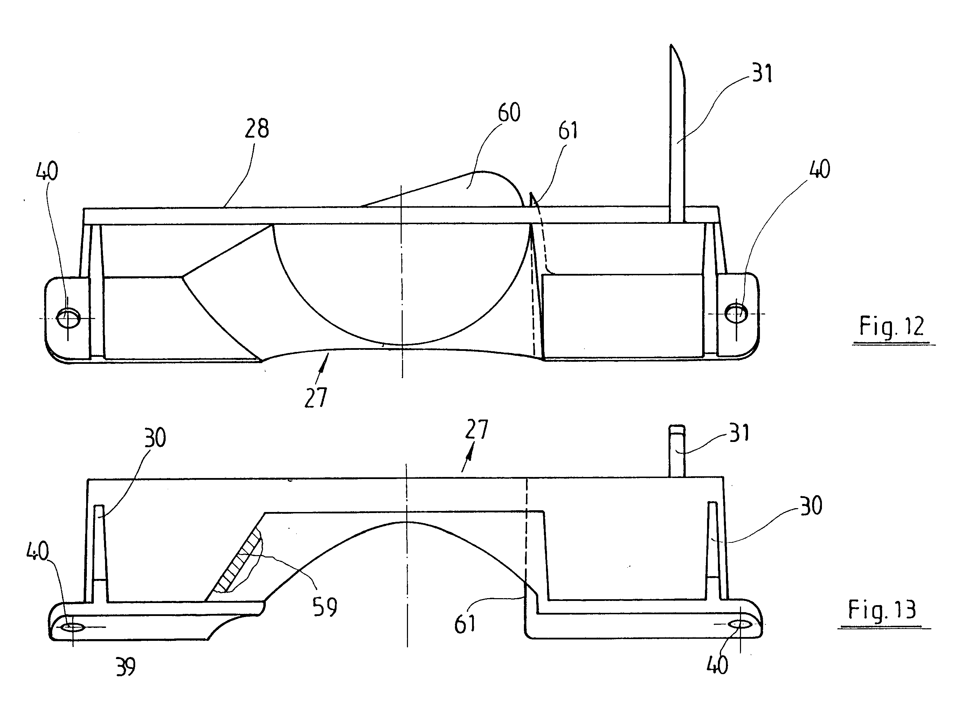

Die Lagerung des Gegenmessers 27 ist als Einzelheit im vergrößerten Maßstab für eine der beiden Lagerstellen des Gegenmessers 27 am Schneidgehäuse 11 in Fig. 8 dargestellt. Die aus einem Gummiwerkstoff mit einer guten Dämpfungseigenschaft bestehenden Lagerstücke 37 sind in den Lagerausnehmungen 38 aufgenommen. Sie sind kammerartig umschlossen. Das Gegenmesser 27 liegt mit seiner Auflagefläche 39 auf der Oberfläche des Lagerstückes 37 auf. In der Auflagefläche 39 ist eine Bohrung oder ein Schlitz 49, wie er beispielsweise aus den Figuren 12 und 13 ersichtlich ist, versehen. Ferner ist das Schneidgehäuse 11 am Grund der Lagerausnehmung 38 ebenfalls mit einer Bohrung vorhanden. Die Befestigungsschraube 40 ist von unten durch das Schneidgehäuse 11 bzw. dessen Bohrung und das Lagerstück 37 sowie die Bohrung 49 bzw. den Schlitz im Gegenmesser 27 hindurchgeführt. Von der Unterseite des Schneidgehäuses 11 her ist im Bereich der Bohrung ein aus Gummi oder dergleichen dämpfendem Werkstoff bestehendes weiteres Lagerstück 37a eingesetzt, an welchem sich der Schraubenkopf über eine Zwischenscheibe abstützt. Hierdurch wird ein unmittelbarer Kontakt der Befestigungsschraube 40 zum Schneidgehäuse 11 vermieden. Schallbrücken werden hierdurch ausgeschlossen. Das Gegenmesser 27 ist also nur mittelbar über die dämpfenden Lagerstücke 37,37a am Schneidgehäuse 11 abgestützt. Auch die Schraube 40 ist mit einer Mutter versehen, die über eine Zwischenscheibe auf der der Lagerfläche des Gegenmessers abgewandten Fläche abgestützt ist. Die alternative Ausbildung der Ausnehmung für die Durchführung der Befestigungsschraube 40 im Gegenmesser 27 als Schlitz 49 ergibt die Möglichkeit des Ausschwenkens des Gegenmessers 27, wenn das andere Ende des Gegenmessers 27 über eine Bohrung 49 festgelegt ist. Die beiden Enden des Gegenmessers 27 sind über gleichartige und im Zusammenhang mit Figur 8 beschriebene Lagerungsanordnung am Schneidgehäuse 11 festgelegt.

Das Gegenmesser 27 besitzt einen mittleren Abschnitt, der das Zentrum der Messerscheibe 14 überdeckt und als Gegenhalter 31 ausgebildet ist, sowie seitlich zu den Befestigungsstellen des Gegenmessers 27 im Schneidgehäuse 11 hin Stützflächen 28. Zwischen den die Stützflächen 28 bildenden Wandungen und den die Auflageflächen 39 aufweisenden Abschnitten ist eine Verstärkungsrippe 30 vorgesehen. Die Stützfläche 28 ist mit einem spitzen Winkel zur Oberfläche 34 der Scheibe 16 der Messerscheibe 14 angeordnet. Aus der Stützfläche 28, die der freiliegenden Fläche 29 der Messerscheibe 14 zugerichtet ist, steht der Gegenhalter 31, der das Zentrum der Messerscheibe 14 überdeckt, hervor. In der der Oberfläche 34 der Messerscheibe 14 zugewandten Fläche des Gegenhalters 31 ist eine Ausnehmung 33 vorgesehen. Das Gegenmesser 27 ist so angeordnet, daß der Nabenansatz 25 mit seiner kegeligen Außenfläche 26 in die Ausnehmung 33 des Gegenhalters 31 hineinragt. Ferner ist die Ausnehmung so gestaltet, daß auch die Befestigungsschraube 24 geschützt in der Ausnehmung 33 untergebracht ist. Zwischen der Ausnehmung 33 und der Außenfläche 26 des Nabenansatzes 25 ist Spiel vorhanden, so daß die Messerscheibe 14 ungestört rotieren kann.

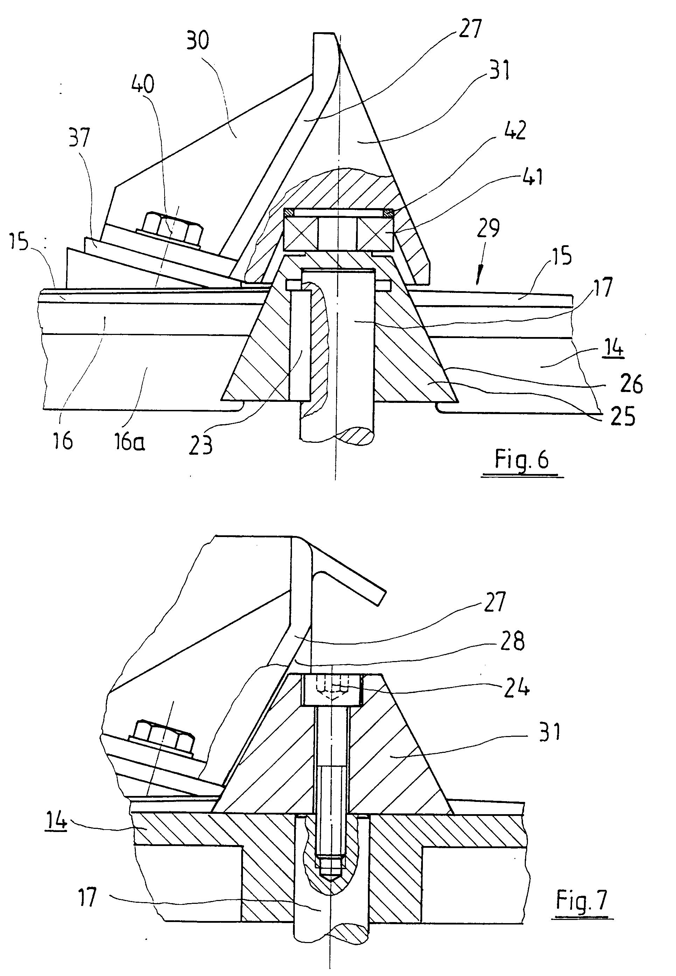

Der Gegenhalter 31 ist, wie insbesondere aus den Figuren 4 und 5 erkennbar, als Kegelfläche ausgebildet. Er bildet einen Teilkegel 35, dessen Außenmantel mit einem stumpfen Winkel zur Oberfläche 34 der Scheibe 16 verläuft. Er ist mit diesem stumpfen Winkel von der freiliegenden Fläche 29 wegverlaufend angeordnet. Die Kegelachse 36 ist eine Verlängerung der Drehachse 18 der Messerscheibe 14. Im Querschnitt von Figur 2 gesehen ist erkennbar, daß die Stützfläche 28 praktisch einen Verlauf aufweist, der eine Ergänzung zur Außenfläche 35 des Teilkegels ist. Die Außenfläche des Teilkegels 35 geht mit einem Radius 32 in die Stützfläche 28 über. In Fortführung der Außenfläche 35 ist eine Abschlußfläche 47 vorgesehen. Diese ist Bestandteil des Deckels 45, der eine Zugangsöffnung 44 im Schneidgehäuse 11 abdeckt. Durch die Zugangsöffnung 44 ist eine Montage bzw. Demontage des Gegenmessers 27 und der Messerscheibe 14 möglich. Die Abschlußfläche 47 bildet mit .der Stützfläche 28 einen stumpfen Winkel, der so bemessen ist, daß die Abschlußfläche 47 eine Verlängerung des Mantels der Kegelfläche 35 darstellt.

Bei der Ausbildung gemäß Figuren 2 und 3 wird erreicht, daß das montierte Gegenmesser 27 eine Sicherung der Messerscheibe 14 bewirkt und zwar auch dann, wenn vergessen wurde, die Befestigungsschraube 40 zur Festlegung der Messerscheibe 14 in die Antriebswelle 17 voll einzuschrauben. Für den Fall, daß die Befestigungsschraube 40 zwar eingesetzt, aber nicht vollständig angezogen wird, ist eine Befestigung des Gegenmessers 27 im Schneidgehäuse 11 nicht möglich. Hierdurch wird erkennbar, daß die Funktionsfähigkeit nicht erreicht ist. Erst wenn die Befestigungsschraube 40 mit einer ausreichenden Tiefe in die Antriebswelle 17 eingeschraubt ist, ergibt sich ein genügender Abstand zu den Wandungen der Ausnehmung 30, so daß das Gegenmesser 27 in eine Berührung mit den Lagerstücken 37 gebracht werden kann.

In Figur 6 ist eine weitere Ausgestaltung dargestellt, bei der das Gegenmesser 27 genutzt wird, um die Messerscheibe 14 axial auf der Welle 17 zu sichern. Hierzu ist in der Ausnehmung 33 des Gegenhalters 31 ein Drucklager 41 auf einer federnden Auflage 42 abgestützt. Das Drucklager 41 stützt sich an der Stirnfläche 43 des Nabenansatzes 25, welcher Bestandteil der Scheibe 16 des Messerscheibe 14 ist, ab.

In Figur 7 ist eine alternative Ausführungsform als Detail dargestellt. Es ist das Gegenmesser 27 mit der Stützfläche 28 erkennbar. Die Messerscheibe 14 wird durch einen Kegelstumpf auf der Antriebswelle 17 gehalten. Dieser stellt den Gegenhalter 31 dar, der mit der Messerscheibe rotiert. Der Gegenhalter 31 ist mit einer abgesetzten Bohrung versehen. In diese ist eine Schraube 24 eingesetzt, die in der Antriebswelle 17 festgeschraubt ist. Die Kegelfläche des Gegenhalters 31 korrespondiert zur Neigung der Stützfläche 28 des Gegenmessers 27.

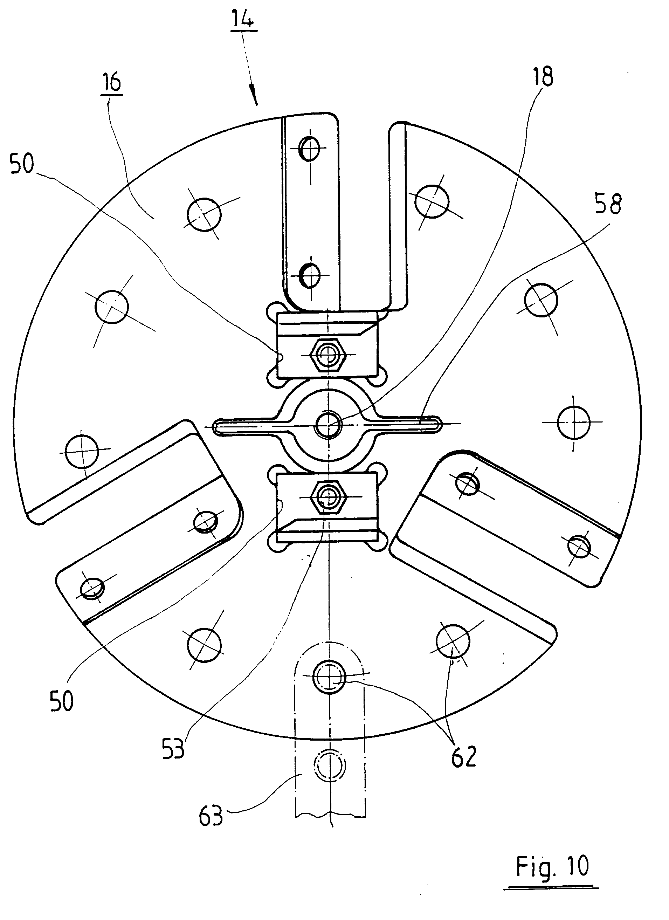

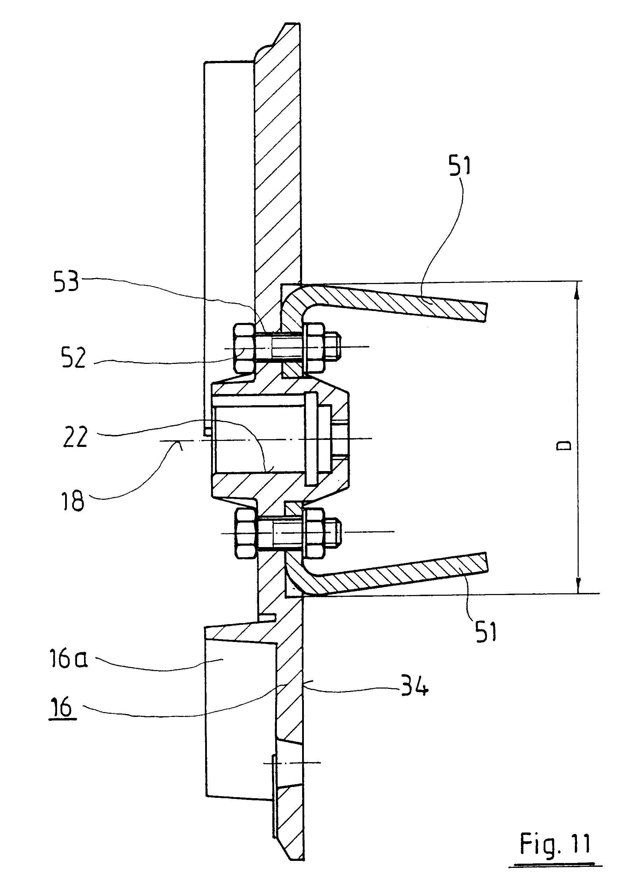

Aus den Figuren 9-13 sind alternative Ausführungsformen für die Messerscheibe 14 und das Gegenmesser 27 ersichtlich. In den Figuren 10 und 11 ist eine Messerscheibe 16 dargestellt, welche mit Vormessern 51 versehen ist.

Es sind zwei diametral gegenüberliegende Vormesser 51 vorgesehen, die in Ausnehmungen 50 in der Oberfläche 34 der Messerscheibe 14 bzw. der Scheibe 16 angeordnet sind. Es ist erkennbar, daß die Vormesser 51 exzentrisch zur Drehachse 18 befestigt sind. Die Befestigung erfolgt über Schrauben 52, die entsprechende Durchgangsbohrungen 55 der Vormesser 51 durchgreifen und in Gewindebohrungen 53 der Scheibe 16 eingeschraubt sind. Eines der beiden Vormesser 51 ist in Figur 9 als Einzelteil in Seitenansicht und Draufsicht dargestellt. Das Vormesser 51 ist aus einem Flachstahl hergestellt und abgewinkelt. Der kurze Schenkel 54 dient zur Aufnahme und Befestigung in der Aufnahmeausnehmung 50 der Scheibe 16 unter Zuhilfenahme der Schraube 52, welche durch die Durchgangsbohrung 55 des kurzen Schenkels 54 hindurchgeführt ist. Der lange Schenkel 56 besitzt in Drehrichtung vorne eine Schneidkante 57. Der lange Schenkel 56 ist so abgewinkelt, daß er bezüglich der Oberfläche 34 mit größerwerdendem Abstand von dieser, sich der Drehachse 18 der Messerscheibe 14 annähert.

Ferner sind in Umfangsrichtung versetzt zu den Vormessern 51 Flügel 58 von der Oberfläche 34 der Scheibe 16 vorstehend angeordnet. Die Vormesser 51 werden zumindestens teilweise von dem Gegenmesser 27,welches die Messerscheibe 14 überspannt, überdeckt. Das Gegenmesser 27 weist hierzu eine Ausnehmung 59 auf, die teilweise als Kegelstumpfbohrung ausgebildet ist. Der Rotationsdurchmesser D der Vormesser 51 ist größer als die Breite des Gegenmessers 27, mit dem dieses die Messerscheibe 14 überdeckt. Das Gegenmesser 27 ist im Verhältnis zur Drehachse 18 so angeordnet, daß die rotierenden Vormesser 51 aus der Stützfläche 28, an der das zu häckselnde Gut zur Anlage kommt, hervorragen. Über die Stützfläche 28 springt jedoch ein Abweiser 60 hervor, der verhindert, daß von oben Astwerk in den Bereich zwischen die Vormesser 51 gelangen kann und zu einer Blockade führt.

Die Schneidkanten 57 der Vormesser 51 arbeiten mit einer Gegenschneide 61 zusammen, welche von der Stützfläche 28 des Gegenmessers 27 vorsteht. Bei Vorbeibewegung der Schneidkante 27 an der Gegenschneide 61 ist aufgrund der Abwinklung nach oben von der Oberfläche 34 der Messerscheibe 14 weg ein größerer Spalt als zur Oberfläche 34 hin vorhanden. Hierdurch wird ein sauberes Schneiden ermöglicht. Der Abweiser 60 sorgt dafür, daß größere Äste bei Auftreffen auf die Stützfläche 28 nicht in den Bereich der Vormesser 51 gelangen und von diesen erfaßt sondern weiter in Richtung auf den Gegenhalter 31 bewegt werden, der an einem seitlichen Ende des Gegenmessers 27 befestigt ist. Von den Vormessern 51 erfaßtes Gut wird zum Teil auch durch die Ausnehmung 59 hindurch auf die Rückseite, die in Ansicht in Figur 13 dargestellt ist, transportiert. Aufgrund der zusätzlichen Flügel 58 wird es radial nach außen bewegt und zusätzlich von den Messerklinken 15 der Messerscheibe 14 erfaßt und gegen die Stützfläche 39 bewegt und erneut zerkleinert. Die Stützfläche 39 ist mit einem spitzen Winkel zur Oberfläche 34 des Messers angeordnet.

Die Messerscheibe 14 gemäß den Figuren 10 und 11 ist auch ohne Vormesser 51 einsetzbar. Die Flügel 58 sorgen dann dafür, daß kleinteiliges Gut, das in den Bereich der Ausnehmung 59 gelangt, auf die Rückseite des Gegenmessers 27 oder nach vorne ausgeworfen wird und in den Bereich der Messerklingen 15 gelangt und dann entweder bei Anlauf an die Stützfläche 28 oder die Unterfläche 39 bzw. Lagerfläche des Gegenmessers zur Anlage kommt und dort von den Messerklingen 15 zerkleinert wird.

Für den Fall, daß Verstopfungen auftreten sollten, kann die Messerscheibe 14 von Hand über einen Betätigungshebel 63 gedreht werden, welcher mit einem Zapfen in umfangsverteilte Bohrungen 62 in der Scheibe 16 eingesetzt werden kann und sich mit einem Absatz bzw. mit einem weiteren Zapfen an der Außenkontur der Scheibe abstützt.

In diesem Zusammenhang wird auf Figur 10 Bezug genommen, in der in gestrichelten Linien ein solcher Betätigungshebel 63 eingezeichnet ist.

### Bezugszeichenliste

- 1: Häcksler
- 2: Schneidwerk
- 3: Trichter
- 4: Einfüllöffnung des Trichters
- 5: Auswurföffnung des Schneidwerkes
- 6: Sammelvorrichtung
- 7: Motor
- 8: Konsole
- 9: Gestell
- 10: Räder
- 11: Schneidgehäuse
- 12: Anschlußfläche
- 13: Öffnung in Anschlußfläche
- 14: Messerscheibe
- 15: Messerklinge
- 16: Scheibe
- 16a: Auswurfflügel
- 17: Antriebswelle
- 18: Drehachse der Antriebswelle
- 19: Lager
- 20: Riemenscheibe
- 21: Riemen
- 22: Nabenbohrung
- 23: Keil
- 24: Befestigungsschraube
- 25: Nabenansatz
- 26: Kegelige Außenfläche des Nabenansatzes
- 27: Gegenmesser
- 28: Stützfläche
- 29: freiliegende Fläche der Messerscheibe
- 30: Verstärkungsrippe
- 31: Gegenhalter
- 32: Radiusübergang
- 33: Ausnehmung
- 34: Oberfläche der Scheibe
- 35: Teilkegel/Mantelfläche
- 36: Achse der Kugelfläche
- 37,37a: Lagerstücke
- 38: Lagerausnehmung
- 39: Lagerfläche des Gegenmessers
- 40: Befestigungsschrauben für Gegenmesser
- 41: Drucklager
- 42: federndes Auflager
- 43: Stirnfläche des Nabenansatzes
- 44: Zugangsöffnung im Schneidgehäuse
- 45: Deckel
- 46: Deckelschrauben
- 47: Abschlußfläche
- 48: Haube
- 49: Bohrung/Schlitz
- 50: Aufnahmeausnehmungen
- 51: Vormesser
- 52: Schraube
- 53: Bohrung
- 54: kurzer Schenkel
- 55: Durchgangsbohrung
- 56: langer Schenkel
- 57: Schneidkante
- 58: Flügel

## Patentansprüche

1. Häcksler zum Zerkleinern von Gartenabfällen, wie Astwerk, Laub, Gras oder dergleichen, mit einem Schneidwerk (2), das eine in einem Schneidgehäuse (17) drehbar gelagerte und von einem Motor (7) angetriebene geschlitzte Messerscheibe (14), an der Messerklingen (15) lösbar befestigt sind und an deren Unterseite Auswurfflügel (16a) angebracht sind, und ein der Messerscheibe (14) zugeordnetes, stationäres Gegenmesser (27) aufweist, und mit einem Trichter (3), der am Schneidgehäuse (11) befestigt ist,
dadurch gekennzeichnet,
daß das Gegenmesser (27) ein vom Trichter (3) und Schneidgehäuse (11) getrenntes Bauteil ist, das die Messerscheibe (14) brückenartig überspannt und am Schneidgehäuse (11) lösbar über Dämpfungslager (37) befestigt ist.

2. Häcksler nach Anspruch 1,
dadurch gekennzeichnet,
daß das Gegenmesser (27) das Zentrum der Messerscheibe (14) überdeckt.

3. Häcksler nach Anspruch 1,
dadurch gekennzeichnet,
daß das Gegenmesser (27) ausschwenkbar am Schneidgehäuse (11) befestigt ist.

4. Häcksler nach Anspruch 1,
dadurch gekennzeichnet,
daß ein Gegenhalter (31) am Gegenmesser (27) befestigt ist.

5. Häcksler nach Anspruch 4,
dadurch gekennzeichnet,
daß der Gegenhalter (31) Teil eines mittleren Abschnittes des Gegenmessers (27) ist und aus der Stützfläche (28) des Gegenmessers (27) vorsteht.

6. Häcksler nach Anspruch 4,
dadurch gekennzeichnet,
daß der Gegenhalter (31) ein auf der Messerscheibe (14) angebrachter und mit dieser rotierender Kegelstumpf ist.

7. Häcksler nach Anspruch 4,
dadurch gekennzeichnet,
daß der Gegenhalter (31) an einem seitlichen Ende des Gegenmessers (27) befestigt ist.

8. Häcksler nach Anspruch 5 oder 6,
dadurch gekennzeichnet,
daß der Gegenhalter (31) als von der Oberfläche (34) der Messerscheibe (14) weg sich verjüngender Teilkegel (35) oder Kegelstumpf mit einer Achse (36), die eine Verlängerung der Drehachse (18) der Messerscheibe (14) darstellt, ausgebildet ist.

9. Häcksler nach Anspruch 8,
dadurch gekennzeichnet,
daß die Stützfläche (28) des Gegenmessers (27) eben ausgebildet ist und mit einer Neigung zur Messerscheibe (14) verläuft.

10. Häcksler nach Anspruch 1,
dadurch gekennzeichnet,
daß das Gegenmesser (27) zur Bildung der Dämpfungslager federnd im Schneidgehäuse (11) befestigt ist.

11. Häcksler nach Anspruch 10,
dadurch gekennzeichnet,
daß die Dämpfungslager durch gummielastische Lagerstücke (37) dargestellt sind.

12. Häcksler nach Anspruch 3,
dadurch gekennzeichnet,
daß der Gegenhalter (31) mit einer dem Zentrum der Messerscheibe (14) zugewandten Ausnehmung (33) versehen ist, mit der er einen Nabenansatz (25) der Messerscheibe (14) übergreift.

13. Häcksler nach Anspruch 12,
dadurch gekennzeichnet,
daß die Befestigungsschraube (24) zur Befestigung der Messerscheibe (14) auf der Antriebswelle (17) in der Ausnehmung (33) verdeckt aufgenommen ist und daß die Ausnehmung (33) Spiel zum Nabenansatz (25) aufweist.

14. Häcksler nach Anspruch 12,
dadurch gekennzeichnet,
daß in der Ausnehmung (33) ein Drucklager (41) gegen ein federndes Auflager (42) verschiebbar abgestützt ist und daß das Drucklager (41) sich bei montiertem Gegenmesser (27) axial auf der Stirnfläche (43) des Nabenansatzes (25) abstützt.

15. Häcksler nach Anspruch 9,
dadurch gekennzeichnet,
daß das Schneidgehäuse (11) als Zugang zum Gegenmesser (27) mit einer Öffnung (44) versehen ist, die mit einem lösbaren Deckel (45) verschlossen ist, der eine Abschlußfläche (27) in Ergänzung zur Stützfläche (28) des Gegenmessers (27) aufweist, die im Querschnitt gesehen einen stumpfen Winkel mit der Stützfläche (28) bildet.

16. Häcksler nach den Ansprüchen 8 und 15,
dadurch gekennzeichnet,
daß die Abschlußfläche (47) mit einer Neigung verläuft, die eine Fortsetzung des Verlaufs der Mantelfläche (35) des Teilkegels des Gegenhalters (31) darstellt.

17. Häcksler nach Anspruch 1,
dadurch gekennzeichnet,
daß die Messerscheibe (14) drei umfangsverteilt angeordnete Messerklingen (15) aufweist.

18. Häcksler nach Anspruch 1,
dadurch gekennzeichnet,
daß die Messerscheibe (14) mindestens ein zu ihrer Drehachse (18) radial versetztes Vormesser (51) aufweist, dessen Schneidkante (57) von der die Messerklingen (15) aufweisenden Oberfläche (34) der Messerscheibe (14) nach oben absteht, daß das Gegenmesser (27) zur Oberfläche (34) der Messerscheibe (14) hin eine Ausnehmung (53) aufweist, in der das Vormesser (51) rotiert und die sich über die Höhe des Vormessers (51), aber nur über einen Teil dessen Rotationsdurchmessers (D) erstreckt.

19. Häcksler nach Anspruch 18,
dadurch gekennzeichnet,
daß das Vormesser (51) aus den Seiten der Stützfläche (28) des Gegenmesser (27) teilweise aus der Ausnehmung (59) bei Rotation hervortritt.

20. Häcksler nach Anspruch 1,
dadurch gekennzeichnet,
daß der mittlere, das Zentrum der Messerscheibe (14) überdeckende Abschnitt des Gegenmessers (27) eine Ausnehmung (59) aufweist, die einen Spalt zur Oberfläche (34) der Messerscheibe (14) bildet.

21. Häcksler nach Anspruch 18 und 20,
dadurch gekennzeichnet,
daß die Messerscheibe (14) mit in der Ausnehmung (59) rotierenden, von der Oberfläche (34) nach oben vorstehenden, und sich radial erstreckenden Flügeln (58) versehen ist.

22. Häcksler nach den Ansprüchen 18 und 21,
dadurch gekennzeichnet,
daß zwei diametral angeordnete Vormesser (51) und die sich radial erstreckenden Flügel (58) umfangsversetzt dazu an der Messerscheibe (14) angebracht sind.

23. Häcksler nach Anspruch 18,
dadurch gekennzeichnet,
daß die Schneidkante (57) des Vormessers (51) geneigt und mit größerwerdendem Abstand zur Oberfläche (34) der Messerscheibe (14) der Drehachse (18) angenähert verläuft und zur Gegenschneide (61) der Ausnehmung (59) von der Oberfläche (34) weg einen zunehmenden Abstand aufweist.

24. Häcksler nach Anspruch 18,
dadurch gekennzeichnet,
daß die Wandung der Ausnehmung (59) Teil einer Kegelstumpfbohrung ist.

25. Häcksler nach Anspruch 18,
dadurch gekennzeichnet,
daß in der Oberfläche (34) der Messerscheibe (14) Aufnahmeausnehmungen (50) angebracht sind, in welchen der parallel zur Oberfläche (34) verlaufende Schenkel (54) der als Winkel gestalteten Vormesser (51) formschlüssig aufgenommen und mit der Messerscheibe (14) verschraubt sind.

26. Häcksler nach Anspruch 5,
dadurch gekennzeichnet,
daß die der Stützfläche (28) des Gegenmessers (27) abgewandte und der Oberfläche (34) der Messerscheibe (14) zugewandte Unterfläche (Lagerfläche 39) einen spitzen Winkel mit der Oberfläche (34) einschließt.

27. Häcksler nach Anspruch 1,
dadurch gekennzeichnet,
daß die Messerscheibe (14) mit nahe ihres Außenumfangs verteilt angeordneten Bohrungen (62) zum Einsetzen eines Betätigungshebels (63) versehen ist.

## Claims

1. A shredder for shredding garden waste such as branches, leaves, grass and the like, having a cutting mechanism (2) which comprises a slotted cutting disc (14) which is rotatably supported in a cutter housing (17), which is driven by a motor (7), which is provided with cutting blades (15) removably secured thereto and to whose underside there are attached ejector wings (16a), said cutting mechanism (2) further comprising a stationary counter blade (27) associated with the cutting disc (14); and having a funnel (3) which is secured to the cutter housing (11),
characterised in
that the counter blade (27) constitutes a component which is separate from the funnel (3) and from the cutter housing (11), which extends over the cutting disc (14) in a bridge-like way and which is removably secured to the cutter housing (11) by means of damping bearings (37).

2. A shredder according to claim 1,
characterised in
that the counter blade (27) covers the centre of the cutting disc (14).

3. A shredder according to claim 1,
characterised in
that the counter blade (27) is pivotably secured to the cutter housing (11).

4. A shredder according to claim 1,
characterised in
that the holding device (31) is secured to the counter blade (27).

5. A shredder according to claim 4,
characterised in
that the holding device (31) forms part of a central portion of the counter blade (27) and projects from the supporting face (28) of the counter blade (27).

6. A shredder according to claim 4,
characterised in
that the holding device (31) is provided in the form of a truncated cone which is attached to the cutting disc (14) and rotates therewith.

7. A shredder according to claim 4,
characterised in
that the holding device (31) is secured to a side end of the counter blade (27).

8. A shredder according to claim 5 or 6,
characterised in
that the holding device (31) is provided in the form of a partial cone (35) or a truncated cone which is tapered from the surface (34) of the cutting disc (14) and whose axis (36) constitutes an extension of the rotational axis (18) of the cutting disc (14).

9. A shredder according to claim 8,
characterised in
that the supporting face (28) of the counter blade (27) is planar and extends at an angle relative to the cutting disc (14).

10. A shredder according to claim 1,
characterised in
that for the purpose of forming the damping bearings, the counter blade (27) is resiliently secured in the cutter housing (11).

11. A shredder according to claim 10,
characterised in
that the damping bearings are formed by rubber-elastic bearing elements (37).

12. A shredder according to claim 3,
characterised in
that the holding device (31) is provided with a recess (33) which faces the centre of the cutting disc (14) and by means of which it extends over a hub projection (25) of the cutting disc (14).

13. A shredder according to claim 12,
characterised in
that the fixing bolt (24) for fixing the cutting disc (14) on the driveshaft (17) is received in the recess (33) so as to be covered and that the recess (33) is provided with play relative to the hub projection (25).

14. A shredder according to claim 12,
characterised in
that, in the recess (33), a pressure bearing (41) is movably supported against a resilient support (42) and that, when the counter blade (27) is in the fitted condition, the pressure bearing (41) is axially supported on the end face (43) of the hub projection (25).

15. A shredder according to claim 9,
characterised in
that to provide access to the counter blade (27), the cutter housing (11) is provided with an aperture (44) which is closed by a removable cover (45) comprising a finishing face (47) which complements the supporting face (28) of the counter blade (27) and which, if viewed in section, forms an obtuse angle with the supporting face (28).

16. A shredder according to claims 8 and 15,
characterised in
that the finishing face (47) extends at an inclination constituting a continuation of the outer face (35) of the partial cone of the holding device (31).

17. A shredder according to claim 1,
characterised in
that the cutting disc (14) comprises three circumferentially distributed cutting blades (15).

18. A shredder according to claim 1,
characterised in
that the cutting disc (14) comprises at least one pre-cutter (51) which is radially offset relative to the rotational axis (18) thereof and whose cutting edge (57) projects upwardly from the surface (34) of the cutting disc (14) comprising the cutting blades (15) and that towards the surface (34) of the cutting disc (14), the counter blade (27) comprises a recess (53) in which the pre-cutter (51) rotates and which extends over the height of the pre-cutter (51), but only over part of the rotational diameter (D) thereof.

19. A shredder according to claim 18,
charactersied in
that when rotating, the pre-cutter (51) projects from the sides of the supporting face (28) of the counter blade (27), partially from the recess (59).

20. A shredder according to claim 1,
characterised in
that the central portion of the counter blade (27) which covers the centre of the cutting disc (14) comprises a recess (59) which forms a gap relative to the surface (34) of the cutting disc (14).

21. A shredder according to claims 18 and 20,
characterised in
that the cutting disc (14) is provided with radially extending wings (58) which rotate in the recess (59) and which project upwardly from the surface (34).

22. A shredder according to claims 18 and 21,
characterised in
that two diametrically opposed pre-cutters (51) and the radially extending wings (58) are attached to the cutting disc (14), said wings being circumferentially offset relative to said pre-cutters.

23. A shredder according to claim 18,
characterised in
that the cutting edge (57) of the pre-cutter (51) extends at an angle and, while its distance from the surface (34) of the cutting disc (14) increases, approaches the rotational axis (18) and extends at an increasing distance from the counter cutting edge (61) of the recess (59) away from the surface (34).

24. A shredder according to claim 18,
characterised in
that the wall of the recess (59) forms part of a truncated-cone-shaped bore.

25. A shredder according to claim 18,
characterised in
that the surface (34) of the cutting disc (14) is provided with receiving recesses (50) in which the arm (54) of the angle-shaped pre-cutter (54) is form-fittingly received and bolted to the cutting disc (14), said arm (54) extending parallel to the surface (34).

26. A shredder according to claim 5,
characterised in
that the underface (bearing face 39) which faces away from the supporting face (28) of the counter blade (27) and faces the surface (34) of the cutting disc (14) encloses an acute angle with the surface (34).

27. A shredder according to claim 1,
characterised in
that the cutting disc (14) is provided with bores (62) for inserting an operating lever (63), said bores being arranged close to the outer circumference of said cutting disc (14).

## Revendications

1. Broyeur pour déchiqueter des débris de jardin, comme des branches, des feuilles, de l'herbe ou similaire, comportant un dispositif de coupe (2) qui présente un disque à couteaux (14) fendu entraîné par un moteur (7) et monté en rotation dans un boîtier (11), dispositif de coupe (2) sur lequel sont fixées de façon détachable des lames de couteau (15), et sur son côté inférieur des ailes d'éjection (16a), et qui présente un contre-couteau stationnaire (27) associé au disque à couteaux (14), et comportant un entonnoir (3) qui est fixé sur le boîtier (11),
caractérisé en ce que
le contre-couteau (27) est un composant séparé de l'entonnoir (3) et du boîtier (11), qui recouvre le disque à couteaux (14) sous la forme d'un pont et qui est fixé de façon détachable sur le boîtier (11) via des amortisseurs (37).

2. Broyeur selon la revendication 1,
caractérisé en ce que le contre-couteau (27) recouvre le centre du disque à couteaux (14).

3. Broyeur selon la revendication 1,
caractérisé en ce que le contre-couteau (27) est fixé sur le boîtier (11) de façon à pouvoir être basculé vers l'extérieur.

4. Broyeur selon la revendication 1,
caractérisé en ce qu'un contre-support (31) est fixé sur le contre-couteau (27).

5. Broyeur selon la revendication 4,
caractérisé en ce que le contre-support (31) est une partie d'un tronçon médian du contre-couteau (27) et dépasse de la surface de soutien (28) du contre-couteau (27).

6. Broyeur selon la revendication 4,
caractérisé en ce que le contre-support (31) est un tronc de cône monté sur le disque à couteaux (14) et en rotation avec celui-ci.

7. Broyeur selon la revendication 4,
caractérisé en ce que le contre-support (31) est fixé sur une extrémité latérale du contre-couteau (27).

8. Broyeur selon l'une ou l'autre des revendications 5 et 6,
caractérisé en ce que le contre-support (31) est réalisé en tant que cône partiel (35) ou tronc de cône qui va en se rétrécissant en éloignement de la surface (34) du disque à couteaux (14), comportant un axe (36) qui représente une prolongation de l'axe de rotation (18) du disque à couteaux (14).

9. Broyeur selon la revendication 8,
caractérisé en ce que la surface de soutien (28) du contre-couteau (27) est réalisée de façon plane et s'étend sous une inclinaison vers le disque à couteaux (14).

10. Broyeur selon la revendication 1,
caractérisé en ce que le contre-couteau (27) est fixé élastiquement dans le boîtier (11) pour former les amortisseurs.

11. Broyeur selon la revendication 10,
caractérisé en ce que les amortisseurs sont représentés par des éléments de montage en caoutchouc élastique (37).

12. Broyeur selon la revendication 3,
caractérisé en ce que le contre-support (31) est pourvu d'un évidement (33), orienté vers le centre du disque à couteaux (14), au moyen duquel il coiffe un moyeu (25) du disque à couteaux (14).

13. Broyeur selon la revendication 12,
caractérisé en ce que la vis de fixation (24) pour la fixation du disque à couteaux (14) est reçue de façon recouverte sur l'arbre d'entraînement (17) dans l'évidement (33) et en ce que l'évidement (33) présente un jeu par rapport au moyeu (25).

14. Broyeur selon la revendication 12,
caractérisé en ce que dans l'évidement (33) est appuyé un élément de montage à pression (41) mobile contre un coussinet élastique (42), et en ce que, lorsque le contre-couteau (27) est monté, l'élément de montage à pression (41) s'appuie axialement sur la surface frontale (43) du moyeu (25).

15. Broyeur selon la revendication 9,
caractérisé en ce que le boîtier (11) est pourvu en tant qu'accès au contre-couteau (27) d'une ouverture (44) qui est fermée par un couvercle détachable (45) qui présente une surface finale (47) en complément à la surface de soutien (28) du contre-couteau (27), cette surface finale (47) formant, vue en section transversale, un angle obtus avec la surface de soutien (28).

16. Broyeur selon les revendications 8 et 15,
caractérisé en ce que la surface finale (47) s'étend sous une inclinaison qui représente une prolongation du tracé de la surface enveloppe (35) du cône partiel du contre-support (31).

17. Broyeur selon la revendication 1,
caractérisé en ce que le disque à couteaux (14) présente trois lames de couteau (15) répartis en périphérie.

18. Broyeur selon la revendication 1,
caractérisé en ce que le disque à couteaux (14) présente au moins un avant-couteau (51) en décalage radial par rapport à son axe de rotation (18), dont l'arête coupante (57) fait saillie vers le haut de la surface (34) du disque à couteaux (14) présentant les lames de couteau (15), en ce que le contre-couteau (27) présente un évidement (53) vers la surface (34) du disque à couteaux (14), évidement (53) dans lequel l'avant-couteau (51) est en rotation et qui s'étend sur la hauteur de l'avant-couteau (51), mais seulement sur une partie de son diamètre de rotation (D).

19. Broyeur selon la revendication 18,
caractérisé en ce que l'avant-couteau (51) dépasse des côtés de la surface de soutien (28) du contre-couteau (27) partiellement hors de l'évidement (59) lors de la rotation.

20. Broyeur selon la revendication 1,
caractérisé en ce que le tronçon médian du contre-couteau (27), qui recouvre le centre du disque à couteaux (14), présente un évidement (59) qui forme une fente par rapport à la surface (34) du disque à couteaux (14).

21. Broyeur selon les revendications 18 et 20,
caractérisé en ce que le disque à couteaux (14) est pourvu d'ailes (58) en rotation dans l'évidement (59), en saillie vers le haut depuis la surface (34) et s'étendant radialement.

22. Broyeur selon les revendications 18 et 21,
caractérisé en ce que deux avant-couteaux (51) agencés de façon diamétrale sont montés sur le disque à couteaux (14), et en ce que les ailes (58) s'étendant radialement sont montées sur le disque à couteaux (14) en décalage périphérique par rapport aux avant-couteaux (51).

23. Broyeur selon la revendication 18,
caractérisé en ce que l'arête coupante (57) de l'avant-couteau (51) s'étend sous une inclinaison et à une distance qui va en augmentant par rapport à la surface (34) du disque à couteaux (14) en rapprochement de l'axe de rotation (18), et présente une distance qui va en augmentant par rapport au contre-tranchant (61) de l'évidement (59) en éloignement de la surface (34).

24. Broyeur selon la revendication 18,
caractérisé en ce que la paroi de l'évidement (59) est une partie d'un perçage tronc conique.

25. Broyeur selon la revendication 18,
caractérisé en ce que dans la surface (34) du disque à couteaux (14) sont ménagés des évidements de réception (50) dans lesquels les bras (54), parallèles à la surface (34) des avant-couteaux (51) réalisés sous la forme d'élément coudés, sont reçus en coopération de formes et sont vissés au disque à couteaux (14).

26. Broyeur selon la revendication 5,
caractérisé en ce que la surface inférieure (surface de montage 39) détournée de la surface de soutien (28) du contre-couteau (27) et orientée vers la surface (34) du disque à couteaux (14) forme un angle aigu avec la surface (34).

27. Broyeur selon la revendication 1,
caractérisé en ce que le disque à couteaux (14) est pourvu de perçages (62) agencés de façon répartie près de sa périphérie extérieure pour la mise en place d'un levier d'actionnement (63).
